# EUROPÄISCHE PATENTSCHRIFT

(11) **EP 1 171 239 B1**
(45) Veröffentlichungstag und Bekanntmachung des Hinweises auf die Patenterteilung: **24.09.2003**
(21) Anmeldenummer: 00922497.3
(22) Anmeldetag: 04.03.2000
(51) Int. Cl.: B01J 37/34, C25D 5/18, H01M 4/88, B01D 53/94

(54) **VERFAHREN ZUR HERSTELLUNG EINES KATALYSATORS**
METHOD FOR PRODUCING A CATALYST
PROCEDE DE PREPARATION D'UN CATALYSEUR

(30) Priorität: 23.03.1999 DE 19912896
(43) Veröffentlichungstag der Anmeldung: 16.01.2002
(73) Patentinhaber: DaimlerChrysler AG, 70567 Stuttgart (DE)
(72) Erfinder: BERGINGER, Andreas, D-87448 Hegge (DE); BRITZ, Peter, D-73230 Kirchheim (DE); DAHLHOFF, Ellen, D-89134 Blaustein (DE); HÖLDERLICH, Wolfgang, D-67227 Frankenthal (DE); SCHNEIDER, Martin, D-73275 Ohmden (DE); STÄB, Gabriele, D-71067 Sindelfingen (DE); URBAN, Peter, D-92224 Amberg (DE)
(86) Internationale Anmeldenummer: EP0001914
(87) Internationale Veröffentlichungsnummer: WO00056452

(56) Entgegenhaltungen:
- EP-A- 0 106 197
- DE-A- 19 532 170
- US-A- 4 273 624
- US-A- 5 326 454

## Beschreibung

Die Erfindung betrifft ein Verfahren zur Herstellung eines Katalysators.

Aus der Offenlegung JP-A-08 134 682 ist ein Elektroplatierverfahren zur Beschichtung eines metallischen Substrats mit einer glatten Edelmetallschicht beschrieben, bei dem ein eisenhaltiges Substrat mit einem Platinüberzug versehen wird. Aus der Patentschrift DE 197 32 170 C2 ist ein Verfahren bekannt, ein keramisches SiC-Substrat örtlich selektiv mit einem Platinüberzug zu überziehen, dessen Oberfläche sich der rauhen Keramikoberfläche anpaßt, indem eine Gleichspannung zwischen das Substrat und eine Gegenelektrode angelegt wird. Das beschichtete Substrat wird anschließend bei erhöhter Temperatur über 400°C behandelt.

Aus der EP-A-106 197, von der die Erfindung ausgeht, ist ein Verfahren zur elektrochemischen Abscheidung einer porösen Platinschicht bekannt. Dabei wird die Schicht auf einem Kohlenstoff- oder Halbleitersubstrat abgeschieden. Dabei wird einmalig ein hoher Spannungspuls zwischen Substrat und Gegenelektrode gegeben, so daß Keime auf dem Substrat abgeschieden werden. Anschließend folgt ein langer Puls bei niedrigerer Spannung, bei dem ein Keimwachstum erfolgt. Aus der US-A-4,273,624 ist ein Elektroplatierverfahren bekannt, bei dem eine dünne, geschlossene Platinschicht auf einem SnO₂-Substrat abgeschieden wird. Aus der JP-A-7 80 327 ist ein Katalysator bekannt, bei dem ein metallisches Substrat mit einer dünnen, porenfreie Edelmetallschicht überzogen ist. Durch die Porenfreiheit zeichnet sich der Katalysator durch eine hohe Sauerstoffresistenz aus.

Es ist die Aufgabe der Erfindung, ein Verfahren zur Beschichtung eines metallischen Substrates anzugeben, welches die Abscheidung eines Edelmetalls mit großer Oberfläche und guter Haftfestigkeit auf einem Substrat ermöglicht.

Diese Aufgabe wird durch die Merkmale des unabhängigen Anspruchs gelöst.

Erfindungsgemäß wird eine Schicht aus katalytisch aktivem metallischem Material mittels elektrochemischer Abscheidung auf einem Metallsubstrat abgeschieden, wobei das Substrat in einen Elektrolyten getaucht ist, welcher das katalytisch aktive metallische Material enthält und Spannung zwischen dem Substrat und einer Gegenelektrode angelegt wird, wobei zwischen Substrat und Gegenelektrode eine elektrische Gleichspannung angelegt wird, der eine Wechselspannung überlagert ist, und das katalytisch aktive Material als poröse oder unzusarimenhängende Schicht auf dem Substrat abgeschieden wird.

Besonders vorteilhaft ist, das Substrat an seiner zu beschichtenden Oberfläche vor der Abscheidung mit einer vorgegebenen Oberflächenrauhigkeit zu versehen, wobei die Oberflächenrauhigkeit bevorzugt im Bereich von 0,3 µm bis 10 µm liegt. Ein weiterer bevorzugter Bereich der Oberflächenrauhigkeit liegt zwischen 0,3 um und 3 µm. Günstigerweise wird die Oberflächenrauhigkeit durch thermische und/oder mechanische und/oder chemische Behandlung erzeugt.

Das katalytisch aktive Material ist bevorzugt aus Metallclustern mit einem Durchmesser zwischen 2 nm bis 1 µm, bevorzugt zwischen 2 nm bis 300 nm, gebildet.

Der besondere Vorteil des Verfahrens ist darin zu sehen, daß die Abscheidung von katalytisch aktiven Schichten mit sehr großer Oberfläche und relativ geringem Gehalt an katalytisch aktivem Material gelingt. Die Schichten weisen eine gute Haftfestigkeit auf und sind auch im Dauereinsatz bei hohen Temperaturen stabil.

Bevorzugte katalytisch aktive Materialien sind Edelmetalle. Ein günstiges katalytisch aktives Material ist Platin. Eine bevorzugte Gegenelektrode wird durch platinisiertes Titanblech gebildet. Eine weitere bevorzugte Gegenelektrode besteht aus platinisiertem Nickel.

In einer besonders bevorzugten Weiterbildung der Erfindung gelingt die Abscheidung von Platin in unterschiedlicher Morphologie. Dadurch werden Katalysatoren bereitgestellt, die unterschiedliche Selektivitäten für eine Stoffumsetzung aufweisen. So gelingt die Herstellung eines bevorzugten Platinkatalysators für einen Reformierungsreaktor, der trotz hoher Kohlenmonoxidkonzentration in einem H₂/CO-Gemisch im Betrieb eine kontinuierlich hohe Aktivität für die Wasserstoffumsetzung aufweist.

Weitere Vorteile und Ausgestaltungen der Erfindung gehen aus den weiteren Ansprüchen und der Beschreibung hervor. Die Erfindung ist nachstehend anhand einer Zeichnung näher beschrieben, wobei
Fig.1 eine Prinzipdarstellung eines Aufbaus zur Durchführung des erfindungsgemäßen Verfahrens,
Fig. 2 schematisch einen Schnitt durch eine beschichtete Oberfläche,
Fig. 3 a, b zwei Aufnahmen mit einem Raster-Elektronenmikroskop von der Oberfläche eines Katalysators mit dentritischen Platin-Clustern,
Fig. 4 eine Aufnahme mit einem Raster-Elektronenmikroskop von der Oberfläche eines Katalysators mit kugelförmigen Platin-Clustern,
Fig. 5 a, b zwei Aufnahmen mit einem Raster-Elektronenmikroskop von der Oberfläche eines Katalysators mit dentritischen Platin-Clustern vor (Fig. 5a) und nach (Fig. 5b) einem Langzeitversuch,
Fig. 6 a, b einen Vergleich von rauhen (Fig. 6a) und glatten (Fig. 6b) Oberflächenprofilen von Stahlsubstraten vor der Beschichtung mit Katalysatormaterial,
Fig. 7 eine Meßkurve zum Wasserstoffumsatz eines Katalysators mit kugelförmigen Platin-Clustern in COhaltiger Atmosphäre und
Fig. 8 eine Meßkurve zum Wasserstoffumsatz eines Katalysators mit dentritischen Platin-Clustern in COhaltiger Atmosphäre zeigt.

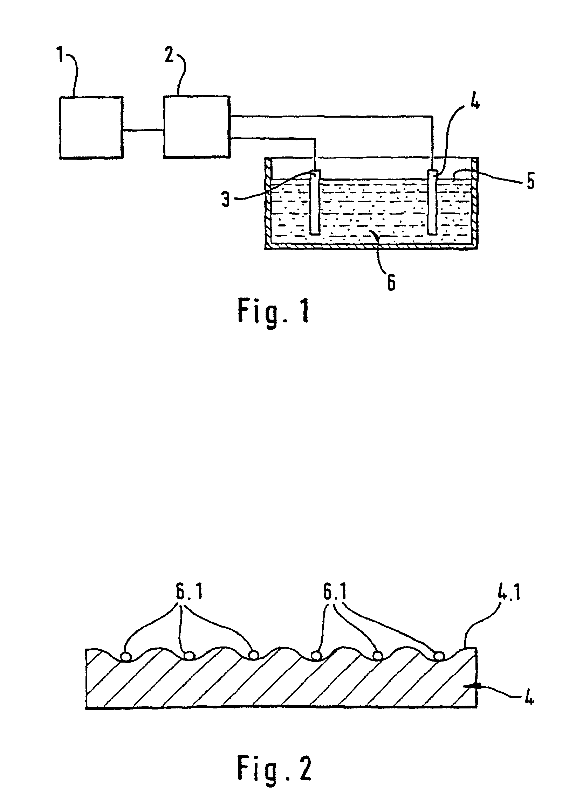

In der Fig. 1 ist eine Anordnung zur Durchführung des erfindungsgemäßen Verfahrens dargestellt. Ein Funktionsgenerator 1 erzeugt eine modulierte Spannung, welche in einem Verstärker 2 verstärkt wird und zwischen eine Anode 3 und ein zu beschichtendes Substrat 4 in einem Abscheidebad 5 gelegt wird. Dabei wird vorzugsweise eine Gleichspannung V_{dc} mit einer Wechselspannung V_{ac} überlagert. Die Summenspannung von Gleichspannung V_{dc} und Wechselspannung V_{ac} wird im folgenden auch als modulierte Spannung Vₘ bezeichnet. Die Wechselspannung ist günstigerweise sinusförmig, kann aber auch andere Formen annehmen, etwa Sägezahn- oder Rechteckform.

Das katalytisch aktive Material 6 wird als Cluster auf dem Substrat 4 abgeschieden. Die Cluster können gemäß der Erfindung unterschiedliche Formen aufweisen, die durch die Abscheideparameter vorgebbar sind. Das mit katalytisch aktivem Material 6 beschichtete Substrat 4 bildet dann den Katalysator.

Die Gleichspannung V_{dc} ist bevorzugt mindestens so groß wie das Abscheidepotential des katalytisch aktiven Materials 6 auf dem Substrat 4, besonders bevorzugt höchstens 50% größer. Der genaue Wert der Gleichspannung V_{dc} ist abhängig von den verwendeten Konstituenten und Verfahrensbedingungen und kann z.B. für unterschiedlich vorbehandelte Substrate verschiedene Werte annehmen, die üblicherweise jedoch nicht stark voneinander abweichen. Bei der Abscheidung von Mischsystemen als katalytisch aktives Material ist es möglich, daβ die bevorzugte Gleichspannung V_{dc} auch unterhalb dieses Abscheidepotentials liegen kann.

Als ein besonders günstiges Substrat wird Edelstahl, besonders Cr-Ni-Stahl 1.4541 oder Cr-Ni-Stahl 1.4571 oder Cr-Al-Stahl 1.4767 verwendet. Es ist zweckmäßig, das Substrat vor der Beschichtung sandzustrahlen oder auf andere Art aufzurauhen, z.B. chemisch, und alkalisch zu entfetten. Dies verbessert die Haftung des katalytisch aktiven Materials 6 auf dem Substrat 4.

In einer bevorzugten Ausführung weist die Wechselspannung V_{ac} einen maximalen Spannungshub V_{PP} zwischen Minimum und Maximum auf, der geringer ist als die Gleichspannung V_{dc}, so daß insgesamt das Vorzeichen der Summenspannung zwischen Substrat 4 und Gegenelektrode 3 nicht wechselt.

Der Strom zwischen Substrat 4, welches bei der Abscheidung als Kathode dient, und Anode 3 wird registriert und dient nach dem Faradayschen Gesetz als Maß zur Bestimmung der abgeschiedenen Menge des katalytisch aktiven Materials 6, welches im Abscheidebad enthalten ist, wobei zweckmäßigerweise Strombeiträge eliminiert werden, die aufgrund der Modulation zum Aufbau und Abbau der elektrolytischen Doppelschicht fließen, da diese nicht von der Reduktion oder Oxidation von Kationen bzw. Anionen herrühren.

Bevorzugt werden Edelmetalle zur Herstellung des Katalysators abgeschieden. Es können aber auch Mischungen von Edelmetallen abgeschieden werden. Eine günstige, preiswerte Anode ist platiniertes Titan statt einer üblichen Opferanode aus massivem Platin, welche besonders vorteilhaft eingesetzt werden kann, falls Platin als katalytisch aktives Material abgeschieden werden soll. Es sind jedoch auch andere Edelmetalle und auch andere Metalle in dieser erfinderischen Weise abscheidbar.

Die modulierte Spannung kann in der Frequenz und/oder in der Amplitude V_{PP} und/oder im Spannungs-Offsetwert V_{dc} eingestellt werden, um für das aktuelle System die Abscheideparameter zu optimieren. Die Werte beeinflussen sowohl die Größe der Cluster, welche auf der metallischen Kathode abgeschieden werden als auch deren Morphologie. Die Cluster auf dem Substrat 4 stellen insgesamt eine große aktive Oberfläche für katalytische Reaktionen zur Verfügung. Für verschiedene Einsatzzwecke kann durch geeignete Wahl der Abscheideparameter und der Beschichtungsdauer jeweils die optimale Clustergröße eingestellt werden.

Es ist besonders vorteilhaft, die Oberfläche des zu beschichtenden Substrates 4 vor der Beschichtung aufzurauhen, etwa durch Beizen oder Sandstrahlen. Auch andere Methoden zur Erhöhung der Oberflächenrauhigkeit sind möglich. Dies ist in Fig. 2 anhand einer schematischen Seitenansicht einer beschichtete Oberfläche dargestellt. Ein Substrat 4 weist eine aufgerauhte Oberfläche 4.1 auf, auf der kugelförmige Metallcluster 6.1 in Vertiefungen angeordnet sind. Die Metallcluster 6.1 können auch an den Spitzen oder Flanken der Aufrauhungen abgelagert sein.

Die erhöhte Oberflächenrauhigkeit hat den Vorteil, daß abgeschiedene Cluster 6.1 besser an der Substratoberfläche haften und ein unerwünschtes Zusammenlaufen der Cluster 6.1 unterbunden wird. Es bildet sich eine katalytisch aktive Schicht aus einzelnen Clustern 6.1, wobei die Schicht vorzugsweise nicht geschlossen ist, sondern aus isolierten Clustern 6.1 gebildet ist.

Bevorzugt liegt die Oberflächenrauhigkeit zwischen 0,3 µm und 10 µm, besonders bevorzugt zwischen 0,3 µm und 3 µm. Durch die feinverteilten Cluster 6.1 bildet sich eine große aktive Oberfläche. Ein weiterer Vorteil ist, daß die erhöhte Oberflächenrauhigkeit selbst noch zur Vergrößerung der Oberfläche des Substrats 4 und damit auch der chemisch aktiven Oberfläche beiträgt. Gleichzeitig können die Cluster 6.1 sehr klein sein, so daß insgesamt nur eine geringe Menge des teuren katalytisch aktiven Materials 6 abgeschieden werden muß, aber der Katalysator sich gleichzeitig durch eine hohe katalytische Aktivität auszeichnet.

Die Haftung der metallischen Cluster 6.1 auf der Substratoberfläche 4.1 ist sehr gut. Dadurch wird die Katalysatorschicht erosionsbeständiger.

Ein besonderer Vorteil gegenüber üblichen Katalysatorschichten besteht darin, daß gemäß der Erfindung ein guter Wärmeübergang von der Katalysatorschicht zum Substrat 4 möglich ist, da metallische Cluster 6.1 mit einem metallischen Substrat 4 verbunden sind. Im Gegensatz dazu sind bekannte, übliche Katalysatorschichten z.B. mit geträgerten Katalysatormaterialien hergestellt, wobei keramische Trägerpartikel mit einem Edelmetall beschichtet sind. Dort ist der Wärmeübergang zwischen katalytisch aktivem Edelmetall und einem Substrat deutlich schlechter, da die dazwischen angeordneten Keramikpartikel nur eine geringe Wärmeleitung aufweisen. Zusätzlich kann bei einem erfindungsgemäß hergestellten Katalysator auch auf übliche Haftvermittlerschichten verzichtet werden, die die Wärmeübergangseigenschaften zwischen katalytisch aktivem Material 6, 6.1 und Substrat 4 zusätzlich verschlechtern.

Ein erfindungsgemäß beschichtetes Substrat 4 ist daher besonders für den Einsatz als Oxidationskatalysator zur Abgasbehandlung in Brennstoffzellensystemen geeignet. Ein weiterer günstiger Einsatz ist bei verschiedenen heterogen katalysierten Prozessen zu sehen. Besonders vorteilhaft ist der erfindungsgemäße Katalysator und das erfindungsgemäße Verfahren bei Abgaskatalysatoren für Fahrzeuge.

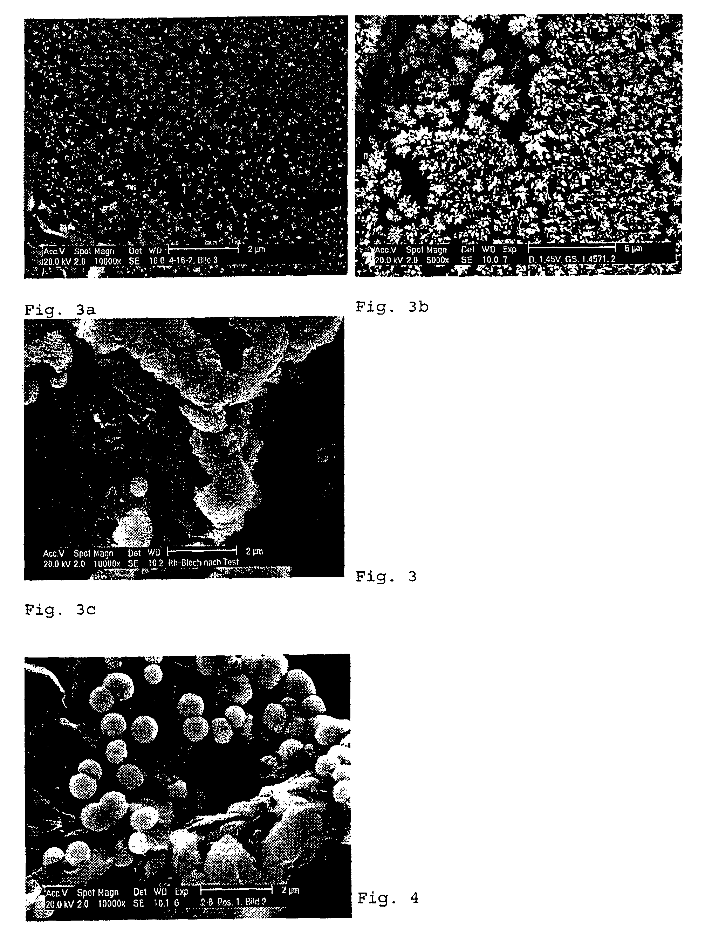

Fig. 3 zeigt Aufnahmen mit einem Raster-Elektronenmikroskop von bevorzugten Katalysatoren mit dentritischen Platin-Clustern (Fig. 3a, 3b), sowie mit Rhodium-Clustern, die im wesentlichen dentritische Form haben.

Die Abscheidung von dentritischen Platin-Clustern auf einem Edelstahlsubstrat erfolgt bevorzugt, indem eine Gleichspannung V_{dc} von 1,4 Volt mit einer Wechselspannung V_{ac} mit V_{PP}=0, 75 Volt (Spannungshub Spitze-Spitze) überlagert und die modulierte Spannung zwischen ein Edelstahlsubstrat und eine Gegenelektrode gelegt wird. Die Frequenz der Wechselspannung V_{ac} liegt bei 10 Hz. Als Elektrolyt wird Platinsäure, insbesondere Hexachloroplatinsäure, verwendet mit einem Platingehalt von 0,1 g/l. Die Abscheidung erfolgt vorzugsweise bei Raumtemperatur.

Die Platin-Cluster zeigen ein dentritisches Wachstum, es sind keine kugelförmigen Platin-Cluster zu beobachten. Der bevorzugte Katalysator zeigt eine hohe Aktivität bei der Wasserstoffumsetzung auch in Gegenwart von Kohlenmonoxid, wobei gleichzeitig auch Kohlenmonoxid mit guter Ausbeute umgesetzt wird.

Bei dem gewählten System gelingt die Abscheidung von dentritischen Platin-Clustern für Frequenzen zwischen 5 und 15 Hz und einer Wechselspannung V_{ac} mit einem Spannungshub V_{PP} zwischen 0,3-1 Volt.

Ein weiterer bevorzugter Katalysator wird durch Abscheidung von Rhodium auf Edelstahl, bevorzugt aus Edelstahlblech 1. 4541 oder 1.4571 oder 1.4767 hergestellt. Es können auch Mischkatalysatoren von Platin auf diese Weise abgeschieden werden oder Katalysatoren mit Mischungen von Edelmetallen und/oder katalytisch aktiven Materialien, wie z.B. PtRh, PtRu, PdPt.

Eine Abscheidung gelingt aus einer Lösung von 0,2 g/l Rhodium in 0,1 m H₂SO₄ bei Raumtemperatur mit einer Gleichspannung V_{dc} von 1,4-1,6 Volt und einer überlagerten Wechselspannung V_{ac} mit V_{PP}=1 Volt (Amplitude Spitze-Spitze) und einer Frequenz von 10 Hz. Die Ausbildung von dentritischem Wachstum der Cluster läßt sich noch durch eine Variation der Spannungsparameter verbessern.

Ein solcher Katalysator zeigt eine gute Aktivität für Methanol. Ein solcher Katalysators ist daher besonders für den Einsatz in methanolbetriebenen Brennstoffzellenfahrzeugen geeignet, besonders bevorzugt in katalytischen Brennern.

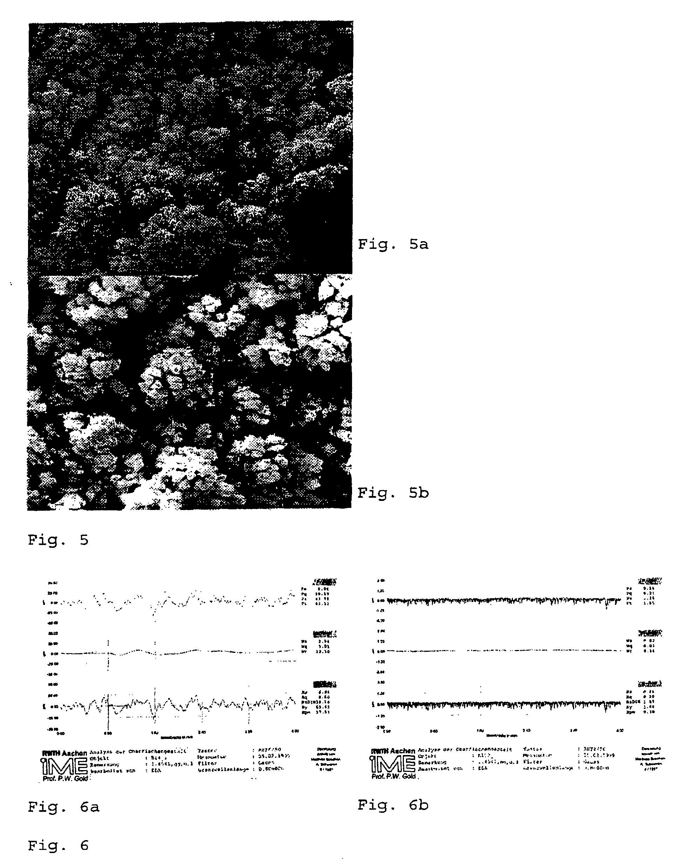

In Fig. 4 ist eine Aufnahme mit einem Raster-Elektronenmikroskop eines weiteren bevorzugten Katalysators mit kugelförmigen Platin-Clustern dargestellt. Die Abscheidung erfolgt mit einer Gleichspannung V_{dc} von 1,2-1,4 Volt und einer Wechselspannung V_{ac} mit V_{PP}=0,4 Volt und 100 Hz; das Abscheidebad entspricht ansonsten dem aus Fig. 3.

Für die Abscheidung von kugelförmigen Platin-Clustern wird bei diesem System vorzugsweise eine Wechselspannung V_{ac} mit Frequenzen von mehr als 50 Hz, vorzugsweise bis 150 Hz verwendet. Die angelegte Gleichspannung V_{dc} variiert mit der Substratvorbehandlung und ist für die Abscheidung kugelförmiger Cluster im wesentlichen gleich oder tendenziell etwas geringer als für die Abscheidung dentritischer Cluster.

Fig. 5 zeigt einen Vergleich von Aufnahmen mit einem Raster-Elektronenmikroskop eines Katalysators mit dentritischen Platin-Clustern vor (Fig. 5a) und nach (Fig. 5b) einem Langzeitversuch, bei dem der Katalysator mehr als 200 h bei hoher Temperatur einem H₂/CO-Gemisch ausgesetzt war. Obwohl hohen Temperaturen von bis zu 600°C ausgesetzt, bleibt die poröse bzw. unzusammenhängende Platinschicht als Katalysator stabil; die Cluster bleiben ortsfest und laufen nicht zusammen. Die erfindungsgemäß abgeschiedene Schicht zeigt, daß sich die Cluster vor und nach einem Dauereinsatz praktisch nicht verändern.

Fig. 6 zeigt einen Vergleich von rauhen (Fig. 6a) und glatten (Fig. 6b) Oberflächenprofilen von Stahlsubstraten, die für die Platinabscheidung verwendet wurden. Die Haftfestigkeit der Platin-Cluster auf dem aufgerauhten Substrat ist gegenüber dem glatten Substrat deutlich verbessert; die Schichten sind wischfest, während die Schichten auf einem unbehandelten, glatten Substrat nicht wischfest sind. Bevorzugt liegt die Oberflächenrauhigkeit zwischen 0,3 um und 10 um, besonders bevorzugt zwischen 0,3 um und 3 um.

Je nach Ausbildung der Cluster ist die katalytische Aktivität und/oder Selektivität des Katalysators unterschiedlich. Ein bevorzugter Katalysator mit kugelförmigen Platin-Clustern setzt im wesentlichen selektiv Wasserstoff um. Bei Anwesenheit von Kohlenmonoxid wird der Katalysator vergiftet und zeigt eine stark verringerte Aktivität. Ein solcher Katalysator wird vorzugsweise unter kohlenmonoxid-freien Bedingungen eingesetzt.

Dagegen zeigt ein bevorzugter Katalysator mit dentritischen Platin-Clustern einerseits bei der Wasserstoffumsetzung eine hohe Toleranz gegenüber Kohlenmonoxid und andererseits hohe Selektivität und hohe Aktivität sowohl für die Wasserstoffumsetzung als auch für die Kohlenmonoxidumsetzung.

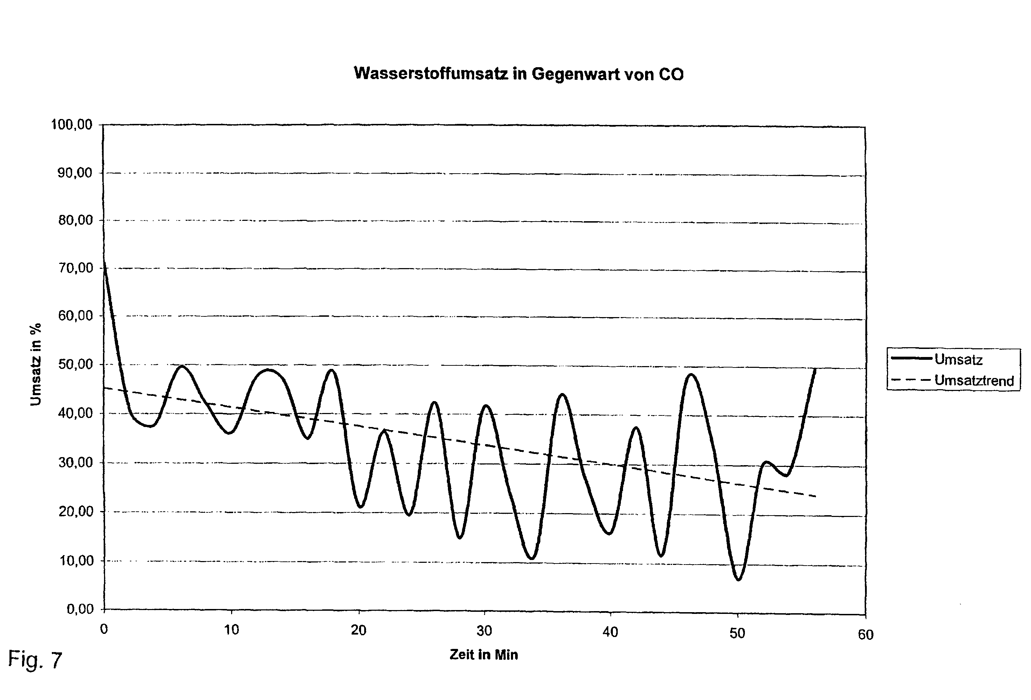

In Fig. 7 ist eine Meßkurve zum Wasserstoffumsatz eines bevorzugten Katalysators mit kugelförmigen Platin-Clustern dargestellt. Der Katalysator ist unter normalen Betriebsbedingungen einem H₂/CO-Gemisch ausgesetzt. Bereits nach wenigen Minuten sinkt der Wasserstoffumsatz in Gegenwart von CO auf geringe Werte.

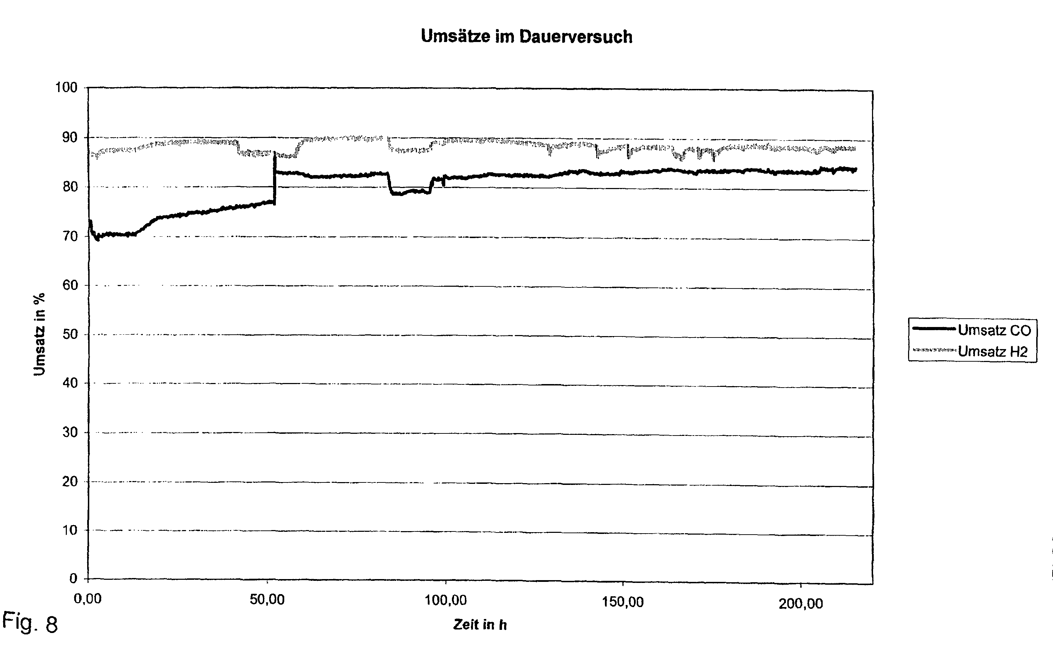

Fig. 8 zeigt eine Meßkurve zum Wasserstoffumsatz eines bevorzugten Katalysators mit dentritischen Platin-Clustern. Der Katalysator ist auch hier unter normalen Betriebsbedingungen einem H₂/CO-Gemisch ausgesetzt. Die Meßkurve zeigt jedoch über mehr als 200 Stunden einen im wesentlichen gleichbleibenden hohen Umsatz von Wasserstoff ebenso wie für Kohlenmonoxid. Der Umsatz kann jeweils noch verbessert werden, da die Betriebsbedingungen nicht optimiert wurden.

Ein erfindungsgemäß hergestellter Katalysator ist besonders erosionsbeständig, und die Herstellung ist gut reproduzierbar. Die Abscheideparameter des katalytisch aktiven Materials auf dem Substrat lassen sich leicht für verschiedene abzuscheidende Materialien durch geeignete Wahl von Gleichspannung V_{dc}, Wechselspannungsamplitude V_{PP} und/oder Frequenz optimieren. Die Prozeßkontrolle ist einfach, und die Katalysatoreigenschaften lassen sich durch einfache Modifikationen des Abscheideprozesses reproduzierbar einstellen. Die Materialausbeute ist gut, so daß z.B. für hochaktive Platinkatalysatoren vergleichsweise geringe Mengen des Edelmetalls eingesetzt werden müssen.

Eine bevorzugte Verwendung eines erfindungsgemäß hergestellten Katalysators betrifft die Verwendung in CO-reicher Umgebung, insbesondere in einer Abgasreinigungsanlage in einem Kraftfahrzeug. Eine weitere bevorzugte Verwendung eines erfindungsgemäßen Katalysators betrifft dessen Verwendung in einem Brennstoffzellensystem.

## Patentansprüche

1. Verfahren zur Herstellung eines Katalysators, wobei katalytisch aktives Material (6, 6.1) als poröse oder unzusammenhängende Schicht auf einem Substrat (4) abgeschieden wird, indem das Substrat (4) in einen Elektrolyten (5) getaucht wird, welcher das katalytisch aktive Material (6) enthält und Spannung zwischen dem Substrat (4) und einer Gegenelektrode (3) angelegt wird,
**dadurch gekennzeichnet,**
**daß** das katalytisch aktive Material (6, 6.1) auf einem metallischen Substrat (4) abgeschieden wird, und
**daß** zwischen Substrat (4) und Gegenelektrode (3) eine elektrische Gleichspannung (V_{dc}) angelegt wird, der eine Wechselspannung (V_{ac}) so überlagert ist, daß das Vorzeichen der Summenspannung aus Gleich- und Wechselspannung (V_{ac}, V_{dc}) nicht wechselt.

2. Verfahren nach Anspruch 1,
**dadurch gekennzeichnet,**
**daß** die Gleichspannung (V_{dc}) mindestens dem Abscheidepotential des katalytisch aktiven Materials (6, 6.1) entspricht.

3. Verfahren nach Anspruch 1,
**dadurch gekennzeichnet,**
**daß** das Substrat (4) an seiner zu beschichtenden Oberfläche (4.1) vor der Abscheidung mit einer vorgegebenen Oberflächenrauhigkeit versehen wird.

4. Verfahren nach Anspruch 3,
**dadurch gekennzeichnet,**
**daß** die Oberflächenrauhigkeit im Bereich von 0,3 µm bis 10 µm liegt.

5. Verfahren nach Anspruch 1,
**dadurch gekennzeichnet,**
**daß** das katalytisch aktive Material (6) als im wesentlichen kugelförmige Metallcluster (6.1) abgeschieden wird, indem der Wechselspannungsanteil (V_{ac}) mit einer Frequenz oberhalb von 50 Hz angelegt wird.

6. Verfahren nach Anspruch 1,
**dadurch gekennzeichnet,**
**daß** das katalytisch aktive Material (6) als im wesentlichen dentritische Metallcluster (6.1) abgeschieden wird, indem der Wechselspannungsanteil (V_{ac}) mit einer Frequenz zwischen 5 und 50 Hz angelegt wird.

7. Verfahren nach Anspruch 1,
**dadurch gekennzeichnet,**
**daß** als katalytisch aktives Material (6) ein Edelmetall oder eine Mischung von Edelmetallen und/oder katalytisch aktiven Materialien verwendet wird.

8. Verfahren nach Anspruch 1,
**dadurch gekennzeichnet,**
**daß** aus einer Lösung einer Platinverbindung in 0,1 m H₂SO₄ mit einem Platingehalt von etwa 0,1 g/l auf einem Edelstahlsubstrat im wesentlichen kugelförmige Platin-Cluster abgeschieden werden, indem zwischen Edelstahlsubstrat (4) und Gegenelektrode (3) eine modulierte Spannung aus einer Überlagerung einer Gleichspannung (V_{dc}) von etwa 1,3 Volt mit einer Wechselspannung (V_{ac}) mit einem Spannungshub (V_{PP}) von 0,3-1 Volt und einer Frequenz von 50-100 Hz angelegt wird.

9. Verfahren nach Anspruch 1,
**dadurch gekennzeichnet,**
**daß** aus einer Lösung einer Platinverbindung in 0,1 m H₂SO₄ mit einem Platingehalt von etwa 0,1 g/l auf einem Edelstahlsubstrat im wesentlichen dentritische Platin-Cluster abgeschieden werden, indem zwischen Edelstahlsubstrat (4) und Gegenelektrode (3) eine modulierte Spannung aus einer Überlagerung einer Gleichspannung (V_{dc}) von etwa 1,3 Volt mit einer Wechselspannung (V_{ac}) mit einem Spannungshub (V_{PP}) von 0,3-1 Volt und einer Frequenz von 5-15 Hz angelegt wird.

10. Verfahren nach Anspruch 1,
**dadurch gekennzeichnet,**
**daß** aus einer Lösung einer Rhodiumverbindung in 0,1 m H₂SO₄ mit einem Rhodiumgehalt von etwa 0,2 g/l auf einem Edelstahlsubstrat (4) im wesentlichen dentritische Rhodium-Cluster abgeschieden werden, indem zwischen Edelstahlsubstrat und Gegenelektrode (3) eine Gleichspannung (V_{dc}) von 1,4-1,6 Volt angelegt und eine Wechselspannung (V_{ac}) mit einem Spannungshub (V_{PP}) von 0,3-1,5 Volt und einer Frequenz von 5-15 Hz überlagert wird.

11. Verfahren nach Anspruch 8 oder 9,
**dadurch gekennzeichnet,**
**daß** die Größe der Platincluster zwischen 2 nm und 1 µm liegt.

12. Verfahren nach Anspruch 1,
**dadurch gekennzeichnet,**
**daß** die Gegenelektrode (3) durch platinisiertes Titan gebildet wird.

## Claims

1. Process for producing a catalytic converter, in which catalytically active material (6, 6.1) is deposited on a substrate (4) as a porous or non-cohesive layer, as a result of the substrate (4) being immersed in an electrolyte (5) which contains the catalytically active material (6) and voltage being applied between the substrate (4) and a counterelectrode (3), **characterized in that** the catalytically active material (6, 6.1) is deposited on a metallic substrate (4), and **in that** an electric direct voltage (V_{dc}), on which an alternating voltage (V_{ac}) is superimposed in such a way that the sign of the sum voltage of direct and alternating voltage (V_{ac}, V_{dc}) does not change, is applied between substrate (4) and counterelectrode (3).

2. Process according to Claim 1, **characterized in that** the direct voltage (V_{dc}) at least corresponds to the deposition potential of the catalytically active material (6, 6.1).

3. Process according to Claim 1, **characterized in that** the substrate (4) is provided, on its surface (4.1) which is to be coated, with a predetermined surface roughness prior to the deposition.

4. Process according to Claim 3, **characterized in that** the surface roughness is in the range from 0.3 µm to 10 µm.

5. Process according to Claim 1, **characterized in that** the catalytically active material (6) is deposited as substantially spherical metal clusters (6.1) as a result of the alternating voltage component (V_{ac}) being applied with a frequency of over 50 Hz.

6. Process according to Claim 1, **characterized in that** the catalytically active material (6) is deposited as substantially dendritic metal clusters (6.1) as a result of the alternating voltage component (V_{ac}) being applied with a frequency of between 5 and 50 Hz.

7. Process according to Claim 1, **characterized in that** the catalytically active material (6) used is a precious metal or a mixture of precious metals and/or catalytically active materials.

8. Process according to Claim 1, **characterized in that** substantially spherical platinum clusters are deposited on a stainless steel substrate from a solution of a platinum compound in 0.1 M H₂SO₄ with a platinum content of approximately 0.1 g/l as a result of a modulated voltage comprising a direct voltage (V_{dc}) of approximately 1.3 volts superimposed with an alternating voltage (V_{ac}) with a voltage swing (V_{PP}) of 0.3-1 volt and a frequency of 50-100 Hz being applied between stainless steel substrate (4) and counterelectrode (3).

9. Process according to Claim 1, **characterized in that** substantially dendritic platinum clusters are deposited on a stainless steel substrate from a solution of a platinum compound in 0.1 M H₂SO₄ with a platinum content of approximately 0.1 g/l as a result of a modulated voltage comprising a direct voltage (V_{dc}) of approximately 1.3 volts superimposed with an alternating voltage (V_{ac}) with a voltage swing (V_{PP}) of 0.3-1 volt and a frequency of 5-15 Hz being applied between stainless steel substrate (4) and counterelectrode (3).

10. Process according to Claim 1, **characterized in that** substantially dendritic rhodium clusters are deposited on a stainless steel substrate (4) from a solution of a rhodium compound in 0.1 M H₂SO₄ with a rhodium content of approximately 0.2 g/l as a result of a direct voltage (V_{dc}) of 1.4-1.6 volt being applied between stainless steel substrate and counterelectrode (3) and an alternating voltage (V_{ac}) with a voltage swing (V_{PP}) of 0.3-1.5 volts and a frequency of 5-15 Hz being superimposed.

11. Process according to Claim 8 or 9, **characterized in that** the size of the platinum clusters is between 2 nm and 1 µm.

12. Process according to Claim 1, **characterized in that** the counterelectrode (3) is formed by platinum-coated titanium.

## Revendications

1. Procédé pour la fabrication d'un catalyseur, dans lequel un matériau catalytiquement actif (6, 6.1) est déposé sur un support (4) sous la forme d'une couche poreuse ou non continue en immergeant le support (4) dans un électrolyte (5) qui contient le matériau catalytiquement actif (6) et en appliquant une tension entre le support (4) et une contre-électrode (3),
**caractérisé en ce que**
le matériau catalytiquement actif (6, 6.1) est déposé sur un support métallique (4) et
**en ce qu'**entre le support (4) et la contre-électrode (3), on applique une tension électrique continue (V_{dc}) à laquelle est superposée une tension alternative (V_{ac}) de telle sorte que le signe de la somme de la tension continue et de la tension alternative (V_{dc}, V_{ac}) ne change pas.

2. Procédé selon la revendication 1, **caractérisé en ce que** la tension continue (V_{dc}) correspond au moins au potentiel de dépôt du matériau catalytiquement actif (6, 6.1).

3. Procédé selon la revendication 1, **caractérisé en ce que** sur sa surface (4.1) à recouvrir, le support (4) est doté avant le dépôt d'une rugosité de surface prédéterminée.

4. Procédé selon la revendication 3, **caractérisé en ce que** la rugosité de surface est comprise dans la plage de 0,3 µm à 10 µm.

5. Procédé selon la revendication 1, **caractérisé en ce que** le matériau catalytiquement actif (6) est déposé sous la forme d'agglomérats métalliques (6.1) essentiellement en forme de sphères en appliquant la partie tension alternative (V_{ac}) à une fréquence supérieure à 50 Hz.

6. Procédé selon la revendication 1, **caractérisé en ce que** le matériau catalytiquement actif (6) est déposé sous la forme d'agglomérats métalliques (6.1) essentiellement dendritiques en appliquant la partie tension alternative (V_{ac}) à une fréquence comprise entre 5 et 50 Hz.

7. Procédé selon la revendication 1, **caractérisé en ce que** l'on utilise comme matériau catalytiquement actif (6) un métal noble ou un mélange de métaux nobles et/ou de matériaux catalytiquement actifs.

8. Procédé selon la revendication 1, **caractérisé en ce que** l'on dépose des agglomérats de platine essentiellement en forme de sphères à partir d'une solution d'un composé de platine dans du H₂SO₄ 0,1 M avec une teneur en platine d'environ 0,1 g/l sur un support en acier inoxydable, en appliquant entre le support (4) en acier inoxydable et la contre-électrode (3) une tension modulée constituée de la superposition d'une tension continue (V_{dc}) d'environ 1,3 volt et d'une tension alternative (V_{ac}) avec un balayage en tension (Vₚₚ) de 0,3 à 1 volt et à une fréquence de 50-100 Hz.

9. Procédé selon la revendication 1, **caractérisé en ce que** l'on dépose des agglomérats de platine de formes essentiellement dendritiques à partir d'une solution d'un composé de platine dans du H₂SO₄ 0,1 M avec une teneur en platine d'environ 0,1 g/l sur un support en acier inoxydable, en appliquant entre le support (4) en acier inoxydable et la contre-électrode (3) une tension modulée constituée de la superposition d'une tension continue (V_{dc}) d'environ 1,3 volt et d'une tension alternative (V_{ac}) avec un balayage en tension (Vₚₚ) de 0,3 à 1 volt et à une fréquence de 5-15 Hz.

10. Procédé selon la revendication 1, **caractérisé en ce que** l'on dépose des agglomérats de rhodium de formes essentiellement dendritiques à partir d'une solution d'un composé de rhodium dans du H₂SO₄ 0,1 M avec une teneur en rhodium d'environ 0,2 g/l sur un support en acier inoxydable, en appliquant entre le support (4) en acier inoxydable et la contre-électrode (3) une tension continue (V_{dc}) de 1,4-1,6 volt et en superposant à celle-ci une tension alternative (V_{ac}) avec un balayage en tension (Vₚₚ) de 0,3 à 1,5 volt et à une fréquence de 5-15 Hz.

11. Procédé selon les revendications 8 ou 9,
**caractérisé en ce que** la taille des agglomérats de platine est comprise entre 2 nm et 1 µm.

12. Procédé selon la revendication 1, **caractérisé en ce que** la contre-électrode (3) est formée de titane platiné.
